# EUROPEAN PATENT SPECIFICATION

(11) **EP 2 532 891 B1**
(45) Date of publication and mention of the grant of the patent: **12.08.2015**
(21) Application number: 10839557.5
(22) Date of filing: 24.12.2010
(51) Int. Cl.: F03D 11/00, F03D 1/06

(54) **ROTARY BLADE OF WINDMILL AND METHOD OF MANUFACTURING ROTARY BLADE OF WINDMILL**
DREHSCHAUFEL FÜR EINE WINDMÜHLE UND VERFAHREN ZUR HERSTELLUNG DER DREHSCHAUFEL FÜR EINE WINDMÜHLE
PALE TOURNANTE D'ÉOLIENNE ET MÉTHODE DE FABRICATION DE PALES TOURNANTES D'ÉOLIENNES

(30) Priority: 25.12.2009 JP 2009296146
(43) Date of publication of application: 12.12.2012
(73) Proprietor: Mitsubishi Heavy Industries, Ltd., Tokyo 108-8215 (JP)
(72) Inventor: ESAKI, Kouji, Tokyo 108-8215 (JP); KUROIWA, Takao, Tokyo 108-8215 (JP); KAWASETSU, Nozomu, Tokyo 108-8215 (JP)
(74) Representative: Intès, Didier Gérard André
(86) International application number: PCT/JP2010/073349
(87) International publication number: WO 2011/078327

(56) References cited:
- EP-A2- 1 707 806
- WO-A1-03/093672
- WO-A1-2009/003476
- DE-A1-102008 007 304
- JP-A- 2007 255 366
- US-A1- 2007 040 294
- US-A1- 2007 128 025
- US-A1- 2007 140 863
- US-A1- 2008 145 615
- US-A1- 2009 169 392
- US-B2- 7 625 185

## Description

### Technical.Field

The present invention relates to a wind turbine rotor blade constituting a wind-generating wind turbine, and to a producing method of the wind turbine rotor blade.

### Background Art

As a wind turbine rotor blade, one disclosed in patent document US-A1-2009/0169392 is known for example.

A further reinforced blade is known from PCT International Publication WO 2008/086805

### Summary of Invention

### Technical Problem

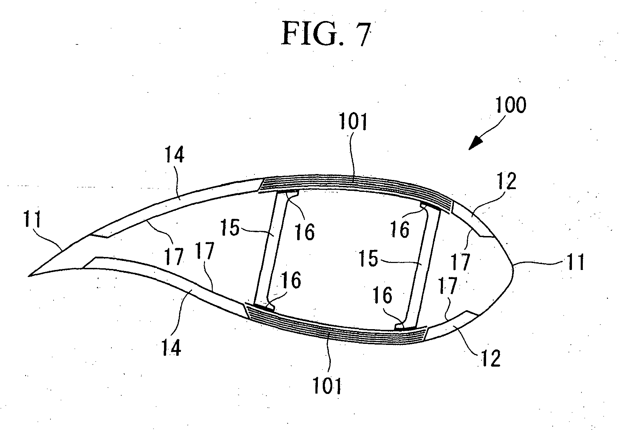

In recent years, there has been proposed a wind turbine rotor blade 100 having a super cap structure which satisfies both lightweight requirement and strength requirement as shown in Fig. 7. The wind turbine rotor blade 100 includes outer skin materials 11, leading edge sandwich materials 12, main strength materials (super cap materials) 101, trailing edge sandwich materials 14, sheer webs (crossbeam materials) 15, and inner skin materials 17. The leading edge sandwich materials 12 and the trailing edge sandwich materials 14 have a sandwich structure in which the outer skin material 11 and the inner skin material 17 form a skin material, and a resin foam body such as PVC and wood material such as balsa form a core material.

In Fig. 7, a symbol 16 represents an adhesive which connects the main strength material 101 and the sheer web 15 to each other.

However, according to such a wind turbine rotor blade 100, a shape of the wind turbine rotor blade 100 (outer shape and sizes of various members) as viewed from the above is varied in a longitudinal direction of the blade, and in accordance with this variation, a plurality of sheets whose widths are varied in the longitudinal direction are cut out from a reinforced fiber sheet (glass fiber cloth, glass fiber preimpregnation, carbon fiber cloth or carbon fiber preimpregnation for example) which is supplied from a fiber maker and which have a constant width, and the plurality of cut sheets are stacked one on top of another, thereby producing main strength materials 101. Therefore, there is a problem that the cut raw material is discarded and wasted, and a producing cost is increased.

The present invention has been accomplished in view of the above circumstances, and it is an object of the invention to provide a wind turbine rotor blade and a producing method of the wind turbine rotor blade capable of eliminating wastes of raw material when a main strength material (super cap material) is produced, and capable of reducing a producing cost.

### Solution to Problem

To solve the above problem, the present invention employed the following means.

A wind turbine rotor blade according to a first aspect of the invention is defined in claim 1. It includes an outer skin material formed of fiber-reinforced plastic, main strength materials disposed on inner surfaces of a back side and a front side of the outer skin material, and crossbeam materials disposed between the main strength materials, wherein the main strength material is formed by stacking, one on top of another, reinforced fiber sheets having constant widths in a longitudinal direction.

According to the wind turbine rotor blade of the first aspect of the invention, since the main strength material is formed (configured) by merely stacking, one on top of another, the reinforced fiber sheets which are supplied from a fiber maker and which have constant widths, the wastes when the main strength material is produced can be eliminated, and the producing cost can be reduced.

In the wind turbine rotor blade according to the first aspect, the number of stacked reinforced fiber sheets constituting the main strength material is selected in accordance with a strength required at a position in a rotation radial direction of the wind turbine rotor blade.

According to such a wind turbine rotor blade, since a necessary strength as the main strength material can be secured, it is possible to prevent brittle fracture, fatigue fracture and buckling against a load in a flap direction (longitudinal direction).

In the wind turbine rotor blade, it is preferable that the crossbeam materials are disposed such that a distance between the crossbeam material disposed on a leading edge side and the crossbeam material disposed on a trailing edge side that constitute the crossbeam materials is maintained constantly from a root side to a tip end side of the blade.

In the wind turbine rotor blade, it is preferable that the crossbeam materials are disposed such that a distance between the crossbeam material disposed on a leading edge side and the crossbeam material disposed on a trailing edge side that constitute the crossbeam materials is gradually narrowed linearly from a root side to a tip end side of the blade.

Here, the term "root side of a blade" means one end side of the blade mounted on the rotor head, and the term "tip end side of a blade" means the other end side of the blade which becomes a free end when the blade is mounted on the rotor head.

In the conventional technique, a distance between a crossbeam material disposed on a leading edge side and a crossbeam material disposed on a trailing edge side is varied non-linearly from the root side to the tip end side of a blade while taking, into account, a width of the wind turbine rotor blade (which is varied in the longitudinal direction of the blade). According to the wind turbine rotor blade of the present invention, this distance between the crossbeam materials can be maintained constantly or varied linearly, it is possible to easily and swiftly carry out a positioning operation when the crossbeam material is fixed to a special jig called gantry for mounting (adhering) the crossbeam material on the main strength material, time required for the producing operation can be shortened, and the productivity can be enhanced.

In the wind turbine rotor blade, it is preferable that the crossbeam material is disposed without being twisted from the root side to the tip end side of the blade.

In the conventional technique, for enhancing performance of the wind turbine rotor blade and for reducing noise, the crossbeam material is also twisted from the root side to the tip end side of the blade while taking, into account, a twist of a cross section of the blade around an axis in the longitudinal direction of the blade. According to the wind turbine rotor blade of the present invention, since the twist of the crossbeam material becomes unnecessary, it is possible to reduce a producing cost of a mold which is used when the crossbeam material is produced, and it is possible to produce the crossbeam material more easily and more swiftly as compared with the conventional technique.

Here, the term "twist" means "twist up" for gradually increasing an angle of attack of the wind turbine rotor blade toward a tip end (blade end) of a blade, or "twist down" for gradually reducing the angle of attack of the wind turbine rotor blade toward the tip end (blade end) of the blade.

It is possible to easily and swiftly carry out the positioning operation when the crossbeam material is fixed to the special jig called gantry for mounting (adhering) the crossbeam material on the main strength material, time required for the producing operation can further be shortened, and the productivity can further be enhanced.

The wind-generating wind turbine of the second aspect of the invention has a wind turbine rotor blade capable of eliminating the wastes of raw material when the main strength material is produced, and capable of reducing the producing cost.

According to the wind-generating wind turbine of the second aspect of the invention, it is possible to contribute to a terrestrial environment problem, and to reduce the producing cost.

According to a third aspect of the invention, there is provided a producing method of a wind turbine rotor blade which includes an outer skin material formed of fiber-reinforced plastic, main strength materials disposed on inner surfaces of a back side and a front side of the outer skin material, and crossbeam materials disposed between the main strength materials, wherein the producing methods includes: a step of stacking, one on top of another, reinforced fiber sheets having constant widths in a longitudinal direction to prepare the main strength material; a step of placing the outer skin material forming a back side surface on a first formwork forming a back side half-cut blade, and placing, on the outer skin material, the main strength material which is disposed on a back side of the crossbeam material; and a step of placing the outer skin material forming a front side surface on a second formwork forming a front side half-cut blade, and placing, on the outer skin material, the main strength material which is disposed on a front side of the crossbeam material.

According to the producing method of the wind turbine rotor blade of the third aspect of the invention, the main strength material is formed (configured) by merely stacking, one on top of another, the reinforced fiber sheets which are supplied from a fiber maker and which have constant widths without cutting the reinforced fiber sheets in accordance with variation in a shape of the wind turbine rotor blade as viewed from above in the longitudinal direction of the blade. Therefore, it is possible to eliminate the wastes of raw material when the main strength material is produced, and to reduce the producing cost.

In the producing method of the wind turbine rotor blade, it is preferable that the crossbeam materials are disposed such that a distance between the crossbeam material disposed on a leading edge side and the crossbeam material disposed on a trailing edge side that constitute the crossbeam materials is maintained constantly from a root side to a tip end side of the blade.

In the producing method of the wind turbine rotor blade, it is preferable that the crossbeam materials are disposed such that a distance between the crossbeam material disposed on a leading edge side and the crossbeam material disposed on a trailing edge side that constitute the crossbeam materials is gradually narrowed linearly from a root side to a tip end side of the blade.

According to the producing method of the wind turbine rotor blade, when the crossbeam material is produced, it is unnecessary to vary the distance between the crossbeam material disposed on the leading edge side and the crossbeam material disposed on the trailing edge side from the root side to the tip end side of the blade while taking the width of the wind turbine rotor blade into account. Therefore, it is possible to easily and swiftly carry out the positioning operation when the crossbeam material is fixed to the special jig called gantry for mounting (adhering) the crossbeam material on the main strength material, time required for the producing operation can be shortened, and the productivity can be enhanced.

In the producing method of the wind turbine rotor blade, it is preferable that the crossbeam material is produced without being twisted from the root side to the tip end side of the blade.

According to the producing method of the wind turbine rotor blade, when the crossbeam material is produced, it is unnecessary to twist the crossbeam material from the root side to the tip end side of the blade while taking the twist of the wind turbine rotor blade into account. Therefore, it is possible to reduce the producing cost of the mold which is used when the crossbeam material is produced, and it is possible to more easily and more swiftly produce the crossbeam material.

Further, since it is possible to more easily and more swiftly carry out the positioning operation when the crossbeam material is fixed to the special jig called gantry for mounting (adhering) the crossbeam material on the main strength material, time required for the producing operation can further be shortened, and the productivity can further be enhanced.

### Effect of the Invention

According to the wind turbine rotor blade and the producing method of the wind turbine rotor blade of the present invention, there is an effect that it is possible to eliminate the wastes of raw material when the main strength material is produced, and to reduce the producing cost.

### Brief Description of the Drawings

Fig. 1 Fig. 1 is a side view showing a wind-generating wind turbine having wind turbine rotor blades according to a first embodiment of the present invention.
Fig. 2 Fig. 2 is a plan view of the wind turbine rotor blade according to the first embodiment of the invention.
Fig. 3 Fig. 3 is a sectional view taken along the arrows A-A in Fig. 2.
Fig. 4 Fig. 4 is a sectional view taken along the arrows B-B in Fig. 2.
Fig. 5 Fig. 5 is a plan view of a wind turbine rotor blade according to a second embodiment of the invention.
Fig. 6 Fig. 6 is a plan view of a wind turbine rotor blade according to a third embodiment of the invention.
Fig. 7 Fig. 7 is similar to Fig. 3, and is a sectional view showing a conventional wind turbine rotor blade.

### Description of Embodiments

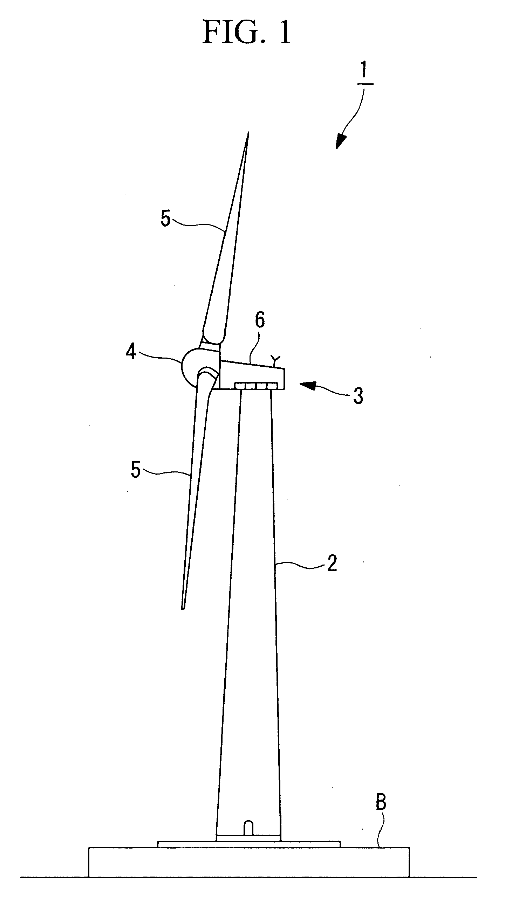

A first embodiment of wind turbine rotor blades according to the present invention will be described with reference to Figs. 1 to 4.

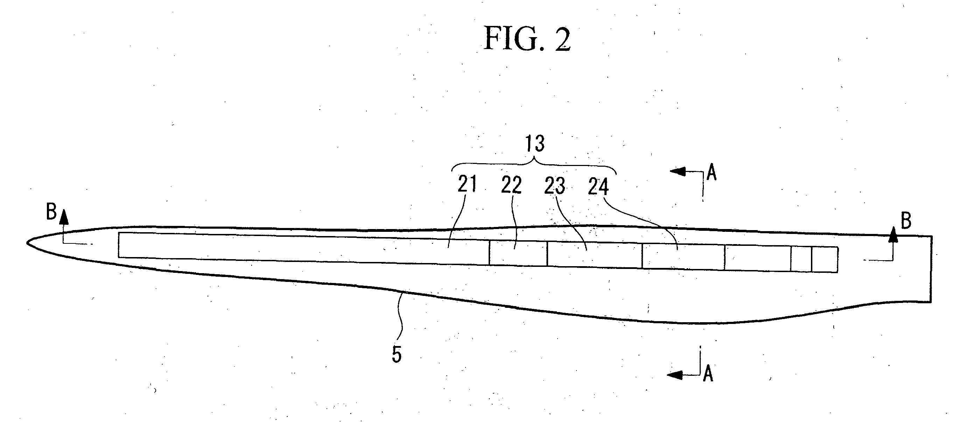

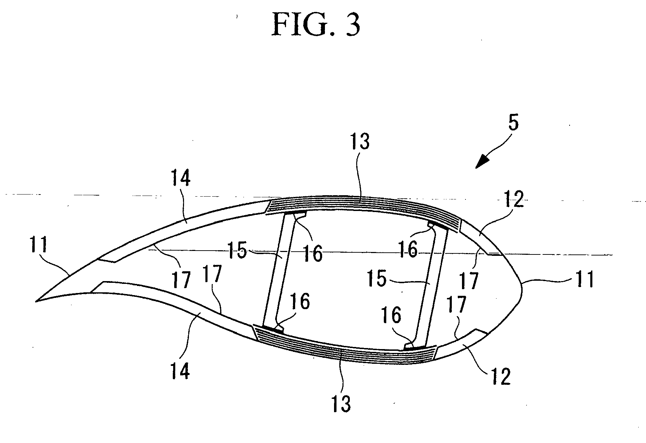

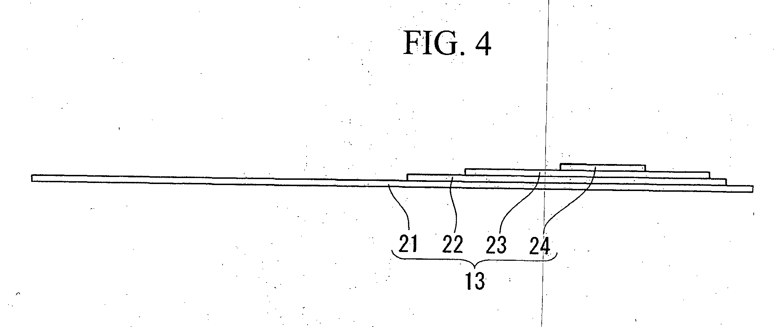

Fig. 1 is a side view showing a wind-generating wind turbine having the wind turbine rotor blades according to a first embodiment of the present invention. Fig. 2 is a plan view of the wind turbine rotor blade according to the first embodiment of the invention. Fig. 3 is a sectional view taken along the arrows A-A in Fig. 2. Fig. 4 is a sectional view taken along the arrows B-B in Fig. 2.

To simplify the drawings, in Figs. 2 and 4, a twist up from a blade root (root) to a blade end (tip end) of the wind turbine rotor blade (twist of the blade in which an angle of attack gradually becomes large from the blade root to the blade end) is not taken into account (not shown). Fig. 4 shows only a super cap material located on a back side.

As shown in Fig. 1, the wind-generating wind turbine 1 includes a column (also called "tower") 2 standing on a foundation B, a nacelle 3 disposed on an upper end of the column 2, and a rotor head 4 provided on a nacelle 3 such that the rotor head 4 can rotate around a substantially horizontal axis.

A plurality of (e.g., three) wind turbine rotor blades 5 are radially mounted on the rotor head 4 around its rotation axis. According to this, a force of wind which impinges on the wind turbine rotor blades 5 from the rotation axis of the rotor head 4 is converted into power which rotates the rotor head 4 around its rotation axis.

The column 2 is formed by connecting a plurality of (e.g., three) units (not shown) in the vertical direction.

The nacelle 3 is disposed on the uppermost one of the units which constitute the column 2. The nacelle 3 includes a nacelle bed plate (not shown) mounted on the upper end of the column 2, and a cover 6 covering the nacelle bed plate from above.

As shown in Fig. 3, each of the wind turbine rotor blades 5 is formed as a super cap structure which satisfies both lightweight requirement and strength requirement. The wind turbine rotor blade 5 includes outer skin materials 11, leading edge sandwich materials 12, super cap materials (main strength material) 13, trailing edge sandwich materials 14 and sheer webs (crossbeam materials) 15, and inner skin materials 17.

The outer skin material 11, the super cap material 13 and an inner skin material 17 are made (formed) of fiber-reinforced plastic (FRP). The super cap material 13 is formed by laminating many reinforced fiber sheets on one another, and the super cap material 13 is provided on a back side of the wind turbine rotor blade 5 (upper side in Fig. 3) and a front side (lower side in Fig. 3) one each. The super cap materials 13 and the sheer webs 15 are connected (coupled) to each other through an adhesive 16 which is cured at room temperature.

The leading edge sandwich material 12 and the trailing edge sandwich material 14 have a sandwich structure in which the outer skin material 11 and the inner skin material 17 form a skin material, and a resin foam body such as PVC and wood material such as balsa form a core material.

According to the super cap structure, the bending strength of the wind turbine rotor blade 5 in a flap direction is maintained mainly by the super cap material 13 which is a member obtained by laminating many reinforced fiber sheets on one another. The leading edge sandwich material 12 and the trailing edge sandwich material 14 are auxiliary used for maintaining the buckling strength of the wind turbine rotor blade 5.

The wind turbine rotor blade 5 of the embodiment includes the super cap materials 13 as shown in Figs. 2 and 4.

As shown in Fig. 2, each of the super cap materials 13 has a constant width (length in a cord direction (vertical direction in Fig. 2)) from a root side to a tip end side of the blade and as shown in Fig. 4, the super cap material 13 is formed by laminating, on one another, reinforced fiber sheets 21, 22, 23 and 24 having different lengths in a longitudinal direction of the blade (lateral direction in Fig. 2) as shown in Figs. 2 and 4. That is, when the super cap material 13 is in a certain position of the wind turbine rotor blade 5 in its longitudinal direction (generally, a radial position when the blade rotates in a range of 40 to 60%), all of the reinforced fiber sheets 21, 22, 23 and 24 are laminated on one another, and the number of the laminated reinforced fiber sheets 21, 22, 23 and 24 is gradually reduced from a position where the number of the laminated sheets is the maximum toward the root side and the tip end side of the blade. In other words, the number of the laminated reinforced fiber sheets 21, 22, 23 and 24 is selected in accordance with a strength required at a position in the rotation radial direction of the wind turbine rotor blade.

In this embodiment, the reinforced fiber sheets 21, 22, 23 and 24 have the same widths and the same thicknesses.

While taking the width of the wind turbine rotor blade 5 into account, a distance between the sheer web 15 disposed on the leading edge side and the sheer web 15 disposed on the trailing edge side is proportional to a length of the blade in a cord direction which is varied from the root side to the tip end side of the blade. The blade is twisted in accordance with a predetermined twist up which is set from the blade root to the blade end.

According to the wind turbine rotor blade 5 of the embodiment, the super cap material 13 is formed (configured) by merely stacking, one on top of another, the reinforced fiber sheets which are supplied from a fiber maker and which have constant widths without cutting the reinforced fiber sheets in accordance with a shape of the wind turbine rotor blade 5 as viewed from above. Therefore, it is possible to eliminate the wastes of raw material when the super cap material 13 is produced, and to reduce the producing cost.

The number of the laminated reinforced fiber sheets 21, 22, 23 and 24 constituting the super cap material 13 is selected in accordance with a strength required at a position in the rotation radial direction of the wind turbine rotor blade.

According to this, since a strength required as the super cap material 13 is secured, it is possible to prevent brittle fracture, fatigue fracture and buckling against a load in a flap direction (longitudinal direction) of the super cap material 13.

The producing method of the wind turbine rotor blade 5 of this embodiment includes: a step of stacking, one on top of another, reinforced fiber sheets 21, 22, 23 and 24 having constant widths in a longitudinal direction to prepare the super cap material 13; a step of placing the outer skin material 11 forming a back side surface on a first formwork (not shown) forming a back side half-cut blade, and placing, on the outer skin material 11, the super cap material 13 which is disposed on a back side of the sheer web 15; and a step of placing the outer skin material 11 forming a front side surface on a second formwork (not shown) forming a front side half-cut blade, and placing, on the outer skin material 11, the super cap material 13 which is disposed on a front side of the sheer web 15.

According to this, the super cap material 13 is formed (configured) by cutting, to a desired length, the reinforced fiber sheets which are supplied from a fiber maker and which have constant widths without cutting the reinforced fiber sheets in accordance with a width of the wind turbine rotor blade 5, and by merely stacking the reinforced fiber sheets one on top of another. Therefore, it is possible to eliminate the wastes of raw material when the super cap material 13 is produced, and to reduce the producing cost.

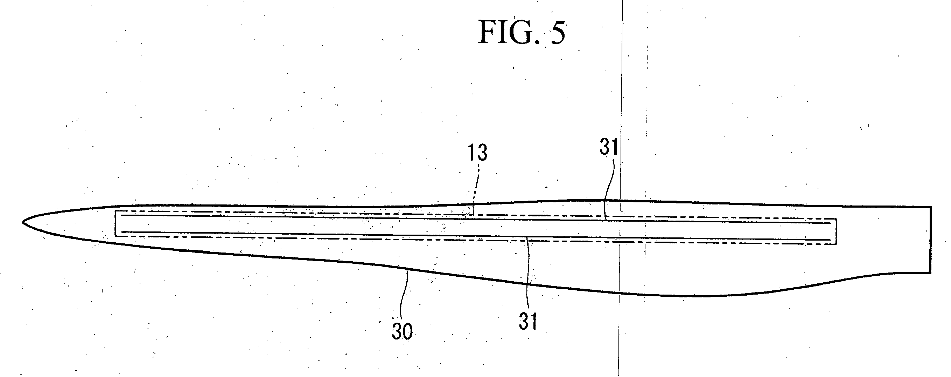

A second embodiment of the wind turbine rotor blade according to the invention will be described with reference to Fig. 5.

Fig. 5 is a plan view of the wind turbine rotor blade according to the second embodiment.

To simplify the drawings, in Fig. 5, a twist up from a blade root (root) to a blade end (tip end) of the wind turbine rotor blade (twist of the blade in which an angle of attack gradually becomes large from the blade root to the blade end) is not taken into account (not shown).

A wind turbine rotor blade 30 according to the second embodiment is different from that of the first embodiment in that the blade includes sheer webs 31 instead of the sheer webs 15. Since other constituent elements are the same as those of the first embodiment, description of these constituent elements is omitted.

The same members as those of the first embodiment are designated with the same symbols.

As shown in Fig. 5, in the second embodiment, the sheer webs 31 are disposed such that a distance between the sheer webs 31 (a distance between the sheer web 31 disposed on a leading edge side and the sheer web 31 disposed on a trailing edge side) is maintained constantly from a root side to a tip end side of the blade.

The sheer web 31 is twisted in accordance with a predetermined twist up which is set from the root side to the tip end side of the wind turbine rotor blade 30.

In the conventional technique, the distance between the sheer web 31 disposed on the leading edge side and the sheer web 31 disposed on the trailing edge side is varied non-linearly from the root side to the tip end side of the blade while taking, into account, a width of the wind turbine rotor blade (which is varied in the longitudinal direction of the blade). According to the wind turbine rotor blade 30 and the producing method of the wind turbine rotor blade 30 of this embodiment, this distance between the sheer webs 31 can be maintained constantly. Therefore, it is possible to easily and swiftly carry out a positioning operation when the sheer web 31 is fixed to a special jig (not shown) called gantry for mounting (adhering) the sheer web 31 on the super cap material 13, time required for the producing operation can be shortened, and the productivity can be enhanced.

Since other effect is the same as that of the first embodiment, description thereof is omitted.

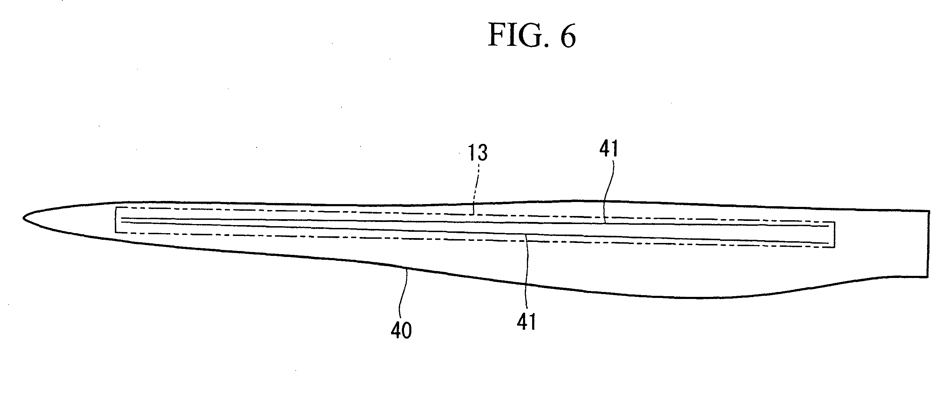

A third embodiment of the wind turbine rotor blade according to the invention will be described with reference to Fig. 6.

Fig. 6 is a plan view of the wind turbine rotor blade according to the third embodiment.

To simplify the drawings, in Fig. 6, a twist up from a blade root (root) to a blade end (tip end) of the wind turbine rotor blade (twist of the blade in which an angle of attack gradually becomes large from the blade root to the blade end) is not taken into account (not shown).

The wind turbine rotor blade 40 according to the third embodiment is different from that of the first embodiment in that the blade includes sheer webs 41 instead of the sheer webs 15. Since other constituent elements are the same as those of the first embodiment, description of these constituent elements is omitted.

The same members as those of the first embodiment are designated with the same symbols.

As shown in Fig. 6, in the third embodiment, the sheer webs 41 are disposed such that a distance between the sheer webs 41 (a distance between the sheer web 41 disposed on a leading edge side and the sheer web 41 disposed on a trailing edge side) is gradually narrowed linearly from the root side to the tip end side of the blade, i.e., such that a shape of the sheer web 41 as viewed from above is tapered toward the tip end side of the blade from the root side.

The sheer web 41 is twisted in accordance with a predetermined twist up which is set from the root side to the tip end side of the wind turbine rotor blade 40.

In the conventional technique, the distance between the sheer web 41 disposed on the leading edge side and the sheer web 41 disposed on the trailing edge side is varied non-linearly from the root side to the tip end side of a blade while taking, into account, a width of the wind turbine rotor blade (which is varied in the longitudinal direction of the blade). According to the wind turbine rotor blade 40 and the producing method of the wind turbine rotor blade 40 of this embodiment, this distance between the sheer webs 41 can be varied linearly. Therefore, it is possible to easily and swiftly carry out a positioning operation when the sheer web 41 is fixed to a special jig (not shown) called gantry for mounting (adhering) the sheer web 41 on the super cap material 13, time required for the producing operation can be shortened, and the productivity can be enhanced.

Since other effect is the same as that of the first embodiment, description thereof is omitted.

In the second and third embodiments, it is further preferable if the sheer web 31, 41 is not twisted from the root side to the tip end side of the wind turbine rotor blade 30, 40 and is disposed (accommodated) in the outer skin material 11 while keeping its outer shape flatly.

If the sheer web 31, 41 is disposed in the outer skin material 11 while keeping its outer shape flatly, it is unnecessary to twist the sheer web 31, 41 from the root side to the tip end side of the blade while taking, into account, the twist down of the wind turbine rotor blade 30, 40 when the sheer web 31, 41 is produced. Therefore, it is possible to reduce the producing cost of a mold used when the crossbeam material is produced, and it is possible to more easily and swiftly produce the sheer web 31, 41.

Since it is possible to more easily and more swiftly carry out the positioning operation when the sheer web is fixed to a special jig called gantry for mounting (adhering) the sheer web 31, 41 on the super cap material 13, time required for the producing operation can further be shortened, and the productivity can further be enhanced.

The present invention is not limited to the above-described embodiments, and the invention can variously be changed and modified within a range not departing from a subject matter of the invention.

### {Reference Signs List}

- 1: wind-generating wind turbine
- 2: column (tower)
- 3: nacelle
- 4: rotor head
- 5: wind turbine rotor blade
- 6: nacelle cover
- 11: outer skin material
- 12: leading edge sandwich material
- 13: super cap material (main strength material)
- 14: trailing edge sandwich material
- 15: sheer web (crossbeam material)
- 16: adhesive
- 17: inner skin material
- 21: reinforced fiber sheet
- 22: reinforced fiber sheet
- 23: reinforced fiber sheet
- 24: reinforced fiber sheet
- 30: wind turbine rotor blade
- 31: sheer web
- 40: wind turbine rotor blade
- 41: sheer web
- B: foundation

## Claims

1. A wind turbine rotor blade (5, 30, 40) comprising an outer skin material (11) formed of fiber-reinforced plastic, main strength materials (13) disposed on inner surfaces of a back side and a front side of the outer skin material (11), and crossbeam materials (15, 31, 41) disposed between the main strength materials (13), wherein the main strength material (13) is formed by reinforced fiber sheets (21, 22, 23, 24) stacked one on top of another, the reinforced fiber sheets (21, 22, 23, 24) having constant widths in a longitudinal direction, and all reinforced fiber sheets (21, 22, 23; 24) having the same width,
the wind turbine rotor blade (5, 30, 40) being **characterized in that**
the stacked reinforced fiber sheets (21, 22, 23, 24) have all the same thickness,
the number of stacked reinforced fiber sheets (21,22, 23, 24) constituting the main strength material (13) is gradually reduced from a position where the number of the stacked reinforced fiber sheets is maximum toward a root side of the wind.turbine rotor blade, and from the said position where the number of the stacked reinforced fiber sheets is maximum toward a tip end side of the wind turbine rotor blade, and
the number of stacked reinforced fiber sheets (21, 22, 23, 24) constituting the main strength material (13) is selected in accordance with a strength required at a position in a longitudinal direction of the wind turbine rotor blade (5, 30, 40).

2. The wind turbine rotor blade (40) according to claim 1, wherein the crossbeam materials (41) are disposed such that a distance between the crossbeam material (41) disposed on a leading edge side and the crossbeam material (41) disposed on a trailing edge side that constitute the crossbeam materials is gradually narrowed linearly from a blade root to a blade end.

3. The wind turbine rotor blade (30, 40) according to claim 2, wherein the crossbeam material (31, 41) is disposed without being twisted from the blade root to the blade end.

4. A wind-generating wind turbine (1) having the wind turbine rotor blade (5, 30, 40) according to any one of claims 1, 2 and 3.

## Patentansprüche

1. Windkraftturbinenrotorblatt (5, 30, 40), umfassend: ein Außenhautmaterial (11), das aus faserverstärktem Kunststoff besteht, Hauptfestigkeitsmaterialien (13), die auf Innenflächen einer Rückseite und einer Vorderseite des Außenhautmaterials (11) angeordnet sind, und Querträgermaterialien (15, 31, 41), die zwischen den Hauptfestigkeitsmaterialien (13) angeordnet sind, wobei das Hauptfestigkeitsmaterial (13) aus faserverstärkten Lagen (21, 22, 23, 24) besteht, die übereinandergelegt sind, wobei die faserverstärkten Lagen (21, 22, 23, 24) konstante Breiten in einer Längsrichtung aufweisen und alle faserverstärkten Lagen (21, 22, 23, 24) die gleiche Breite aufweisen,
wobei das Windkraftturbinenrotorblatt (5, 30, 40) **dadurch gekennzeichnet ist, dass**
die übereinander gelegten faserverstärkten Lagen (21, 22, 23, 24) alle die gleiche Dicke haben,
die Anzahl der übereinander gelegten faserverstärkten Lagen (21, 22, 23, 24), aus denen das Hauptfestigkeitsmaterial (13) besteht, von einer Position, an der die Anzahl der übereinander gelegten faserverstärkten Lagen die größte ist, bis zu einer Wurzelseite des Windkraftturbinenrotorblattes sowie von der Position, an der die Anzahl der übereinander gelegten faserverstärkten Lagen die größte ist, bis zu einer Spitzenendseite des Windkraftturbinenrotorblattes allmählich reduziert wird, und
die Anzahl der übereinander gelegten faserverstärkten Lagen (21, 22, 23, 24), aus denen das Hauptfestigkeitsmaterial (13) besteht, gemäß einer Festigkeit ausgewählt wird, die an einer Position in einer Längsrichtung des Windkraftturbinenrotorblattes (5, 30, 40) benötigt wird.

2. Windkraftturbinenrotorblatt (40) nach Anspruch 1, wobei die Querträgermaterialien (41) so angeordnet sind, dass eine Distanz zwischen dem Querträgermaterial (41), das an einer Vorderkantenseite angeordnet ist, und dem Querträgermaterial (41), das an einer Hinterkantenseite angeordnet ist, welche die Querträgermaterialien bilden, allmählich linear von einer Blattwurzel bis zu einem Blattende schmaler wird.

3. Windkraftturbinenrotorblatt (30, 40) nach Anspruch 2, wobei das Querträgermaterial (31, 41) angeordnet wird, ohne von der Blattwurzel zum Blattende versteht zu werden.

4. Windgenerierende Windkraftturbine (1), die mit dem Windkraftturbinenrotorblatt (5, 30, 40) nach einem der Ansprüche 1, 2 und 3 ausgestattet ist.

## Revendications

1. Pale de rotor d'éolienne (5, 30, 40) comportant une matière de revêtement extérieur (11) formée en matière plastique renforcée de fibres, des matières de résistance principales (13) disposées sur des surfaces intérieures d'un côté arrière et d'un côté avant de la matière de revêtement extérieur (11), et des matières transversales (15, 31, 41) disposées entre les matières de résistance principales (13), dans laquelle la matière de résistance principale (13) est formée par des feuilles renforcées de fibres (21, 22, 23, 24) empilées l'une au-dessus de l'autre, les feuilles renforcées de fibres (21, 22, 23, 24) ayant des largeurs constantes dans une direction longitudinale, et toutes les feuilles renforcées de fibres (21, 22, 23, 24) ayant la même largeur,
la pale de rotor d'éolienne (5, 30, 40) étant **caractérisée en ce que**
les feuilles renforcées de fibres empilées (21, 22, 23, 24) ont toutes la même épaisseur,
le nombre de feuilles renforcées de fibres empilées (21, 22, 23, 24) constituant la matière de résistance principale (13) est progressivement réduit depuis une position où le nombre de feuilles renforcées de fibres empilées est maximum vers un côté de pied de la pale de rotor d'éolienne, et depuis ladite position où le nombre de feuilles renforcées de fibres empilées est maximum vers un côté de bout de la pale de rotor d'éolienne, et
le nombre de feuilles renforcées de fibres empilées (21, 22, 23, 24) constituant la matière de résistance principale (13) est choisi en fonction d'une résistance exigée au niveau d'une position dans une direction longitudinale de la pale de rotor d'éolienne (5, 30, 40).

2. Pale de rotor d'éolienne (40) selon la revendication 1, dans laquelle les matières transversales (41) sont disposées de telle sorte qu'une distance entre la matière transversale (41) disposée sur un côté de bord d'attaque et la matière transversale (41) disposée sur un côté de bord de fuite qui constituent les matières transversales est progressivement rétrécie linéairement depuis un pied de pale jusqu'à un bout de pale.

3. Pale de rotor d'éolienne (30, 40) selon la revendication 2, dans laquelle la matière transversale (31, 41) est disposée sans être vrillée depuis le pied de pale jusqu'au bout de pale.

4. Eolienne (1) ayant la pale de rotor d'éolienne (5, 30, 40) selon l'une quelconque des revendications 1, 2 et 3.
